# EUROPEAN PATENT SPECIFICATION

(11) **EP 0 378 638 B1**
(45) Date of publication and mention of the grant of the patent: **03.11.1993**
(21) Application number: 89907314.2
(22) Date of filing: 09.06.1989
(51) Int. Cl.: B23D 63/12

(54) **APPARATUS AND PROCESS FOR THE GRINDING OF A PROFILE OF A BAND SAW**
APPARAT UND VERFAHREN ZUM SCHLEIFEN EINES PROFILS EINES BANDSÄGEBLATTES
APPAREIL ET PROCEDE DE MEULAGE D'UN PROFIL D'UNE SCIE A RUBAN

(30) Priority: 10.06.1988 NL 8801491
(43) Date of publication of application: 25.07.1990
(73) Proprietor: TEUNISSEN, Jeremias, NL-3762 EN Soest (NL)
(72) Inventor: TEUNISSEN, Jeremias, NL-3762 EN Soest (NL)
(74) Representative: Hooiveld, Arjen Jan Winfried
(86) International application number: NL8900047
(87) International publication number: WO8911937

(56) References cited:
- WO-A-81/02403
- DE-C- 45 747
- DE-C- 3 622 490
- FR-E- 70 702

## Description

The invention relates to an apparatus for the grinding of a profile of a band saw, which apparatus is provided with an abrasive medium disposed above a track along which the band saw is conducted under operating conditions and whereby a relative motion between the band saw and the abrasive medium can be effected in the plane of the band saw for the grinding of individual consecutive parts of the profile of the band saw.

The invention also relates to a process of the aforesaid type.

An apparatus of the said type is known from the United States patent document No. 4,026,073 (Beltzer). In the known apparatus, a band saw is conducted along a circular whetstone which acts as the abrasive medium. In this operation the whetstone, which has been disposed at right angles to the longitudinal direction of the band saw, rotates on its axis. By causing the whetstone to perform a series of substantially upward and downward motions in the plane of the band saw and by simultaneously moving the band saw continuously along its track, individual consecutive parts of the band-saw profile are ground.

A disadvantage of the known apparatus is that the grinding operation proceeds transversely to the longitudinal direction of the band saw, which gives rise to hair cracks in the teeth of the band-saw profile during sawing. A further drawback associated with grinding of a band-saw profile by means of the known apparatus is that the teeth of the profile are not ground uniformly in this fashion. This is due to the following cause. With each downward motion of the whetstone, the continuous displacement of the band saw along its track permits the grinding of one individual part of the band-saw profile. On account of the characteristic shape of a band-saw profile, the whetstone, will wear off non-uniformly during operation. As a result, the teeth of a band-saw profile will be ground unevenly. The refacing of the whetstone itself, whether manually or mechanically, for instance with the aid of a stone, in order to obtain a "uniformly worn" whetstone, does not lead to satisfactory results in actual practice, because either the desired precision of the refacing is not attained or the adjustment of the suspension in particular and the upward and downward motion of the whetstone have to be repeated after each refacing, which in actual practice will again lead to non-uniform grinding of the teeth of the band-saw profile. Yet another drawback of the known apparatus is that a whetstone has no constant performance in terms of "grinding coarseness", that is to say, a whetstone is inherently incapable of grinding the teeth of a band-saw profile with a constant degree of coarseness of fineness at all times.

An object of the present invention is to provide an apparatus and a process for the grinding of a profile of a band saw whereby the teeth of the band-saw profile are ground uniformly and with a constant degree of coarseness without causing the occurrence of (hair) cracks in these teeth during sawing.

To achieve this object, an apparatus of the type mentioned hereinbefore is characterized in that the abrasive medium substantially consists of an endless grinding belt which can circulate continuously in the plane of the band saw over at least one pressure pulley, and that controlling means are provided for guiding the whetting action of the grinding belt while moving in the longitudinal direction over a specific part of the band-saw profile during at least one part of the said motion in the plane of the band saw. Because each individual part of the band-saw profile is ground in the longitudinal direction, no (hair) cracks occur in its teeth. Also, the use of a grinding belt which circulates continuously over a pressure pulley ensures that the teeth of a band-saw profile are ground not only uniformly but also more smoothly and sharply than heretofore. As the outer surface of the grinding belt has a coating of sand grains, for instance alumina, which may have been applied by an electrostatic procedure, grinding by means of the apparatus according to the invention guarantees a constant "grinding coarseness".

One embodiment of an apparatus according to the invention is characterized in that under operating conditions the grinding belt, after each whetting action involving motion in the longitudinal direction over a specific part of the band-saw profile, during which motion the band saw undergoes hardly any displacement along its track, can move in such a fashion in the plane of the band saw, during which motion the band saw is displaced along its track, that the grinding belt can perform a consecutive whetting action in the longitudinal direction over a subsequent part of the band-saw profile and so forth until the whole or a desired section of the band-saw profile has been ground. When the band saw itself is not displaced during grinding, a more accurate whetting action is achieved without entailing any risk of crack formation during sawing with a band saw so treated.

A further embodiment of an apparatus according to the invention is characterized in that the motion of the grinding belt in the plane of the band saw is induced by the provision of a connected push/pull rod which can be conducted by positive drive according to a pattern corresponding with this motion.

Yet another embodiment of an apparatus according to the invention is characterized in that it comprises a bearing frame for supporting a band saw, on which frame the band saw can be conducted along its track, whilst at least part of the bearing frame is hingeable relative to a horizontal shaft. This design makes it possible for one man to fix a band saw in position, as will be elucidated hereinafter.

The invention will now be explained further with reference to the accompanying drawings, in which:
- Figure 1: is a simplified diagram showing how a band-saw profile is ground according to the state of the art;
- Figure 2: is a simplified diagram showing how a band-saw profile is ground according to the invention;
- Figure 3: is a side view of an apparatus according to the invention; and
- Figure 4: is a side view of an apparatus according to the invention showing that at least part of a bearing frame incorporated into the structure of this apparatus is hingeable.

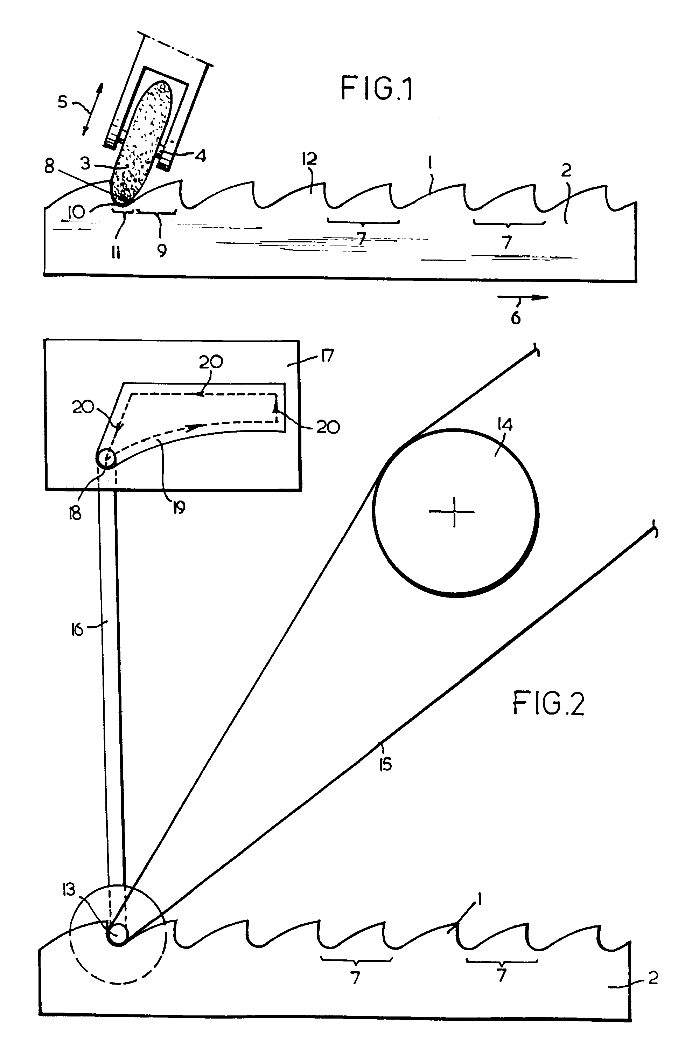

Figure 1 schematically represents the grinding of a band-saw profile 1 according to the state of the art. The apparatus includes a whetstone 3 disposed at right angles to the longitudinal direction of a band saw 2, the said whetstone 3 rotating on its axis 4 under operating conditions. By causing the whetstone 3 to perform a series of upward and downward motions in the plane of the band saw 2 according to arrow 5 and by simultaneously moving the band saw 2 continuously along its track in the direction of arrow 6, individual consecutive parts 7 of the profile 1 of band saw 2 are ground. As mentioned hereinbefore, hair cracks occur in the profile 1, because this mode of operation involves grinding transversely to the longitudinal direction of the band saw 2. As a part 8 of the whetstone 3 takes care of grinding a part 9 of a profile tooth 12, which part 9 is larger than part 11 of a profile tooth 12, the grinding of which is effected by a part 10 of the whetstone 3 under operating conditions, part 8 wears away faster than part 10. As a result, the whetstone 3 is worn non-uniformly, which ultimately leads to unevenly ground profile teeth 12.

Figure 2 schematically depicts the mode of grinding according to the invention for a profile 1 of a band saw 2. A grinding belt 15 which, under operating conditions, runs continuously over a pressure pulley 13 and a tensioning pulley 14 effects its whetting action while moving in the longitudinal direction over a part 7 of the band-saw profile 1 during at least a part of its motion in the plane of the band saw 2. This motion of the grinding belt 15 in the plane of the band saw 2 is induced by a push/pull rod 16 which is conducted by positive drive along a pattern 17 conforming to this motion. The end 18 of the push/pull rod 16 therefore passes every time along a trajectory 19 in the direction of the arrows 20. It is to be observed that the band saw 2 is only displaced along its track whenever the grinding belt 15 makes no whetting contact with the band-saw profile 1 during its displacement in the plane of the band saw 2, so that individual consecutive parts 7 of the band-saw profile 1 are ground. As the apparatus according to the invention operates without requiring any refacing or readjustment, it is fully automatic in the sense that no personnel need constantly be in attendance for readjustment, refacing and the like. Thus, according to the invention an operator-friendly apparatus is obtained which in actual practice also proves to be low-noise.

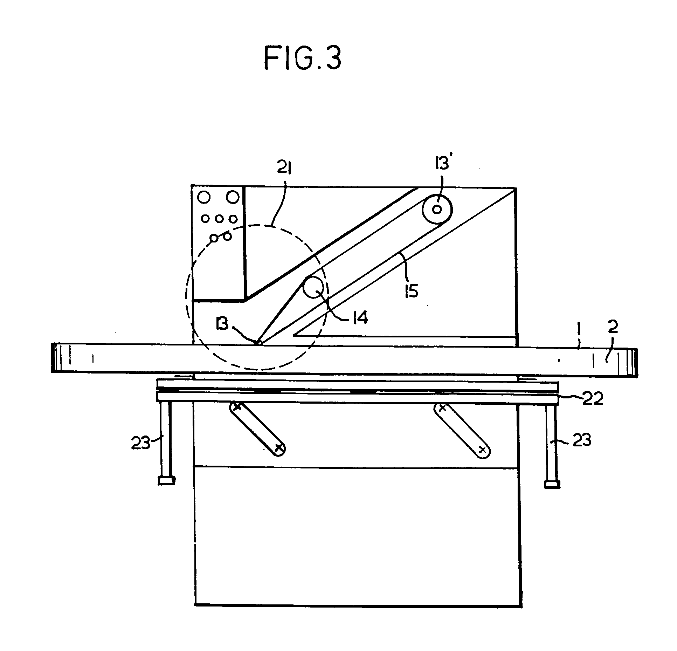

Figure 3 represents a view of an apparatus according to the invention in which the part enclosed within a dashed circle 21 corresponds with that shown in Figure 2. Here the grinding belt 15 moves continuously over a driving pulley 13', the pressure pulley 13 and a tensioning pulley 14. A bearing frame 22 on which the band saw 2 can be conducted along its track is here present in duplicate. The bearing frame 22 is conducted to members 23 intended to displace the band saw 2 in a vertical plane for adjustment of the grinding height.

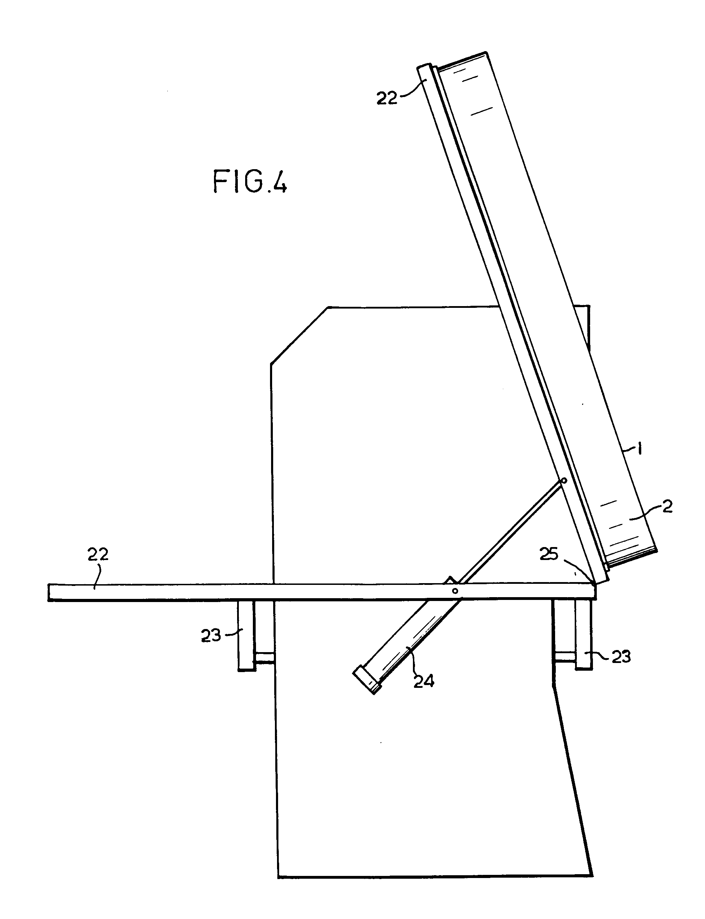

Figure 4 is a lateral view of an apparatus according to the invention shown in Figure 3. Here the upper part of the duplicate bearing frame 22 is pivotable on a horizontal shaft 25 with the aid of a pneumatic cylinder 24. In the situation as drawn, the band saw 2 can be positioned on the upper part of the bearing frame 22 by one man, because it need not be lifted over the entire device as with earlier designs. A final point worth observing is that a metal, for instance stellite, has been applied to a tooth of a band-saw profile for reinforcement.

## Claims

1. An apparatus for the grinding of a profile (1) of a band saw (2), which apparatus is provided with an abrasive medium (3,15) disposed above a track along which the band saw (2) is conducted under operating conditions and whereby a relative motion between the band saw (2) and the abrasive medium (3,15) can be effected in the plane of the band saw (2) for the grinding of individual consecutive parts (7) of the profile (1) of the band saw (2), characterized in that the abrasive medium (3,15) substantially consist of an endless grinding belt (15) which can circulate continuously in the plane of the band saw (2) over at least one pressure pulley (13), and that controlling means (16,17) are provided for guiding the whetting action of the grinding belt (15) while moving in the longitudinal direction over a specific part (7) of the band-saw profile (1) during at least one part of the said motion in the plane of the band saw (2).

2. An apparatus according to claim 1, characterized in that under operating conditons the grinding belt (15), after each whetting action involving a longitudinal motion over a specific part (7) of the band-saw profile (1), during which motion the band saw (2) undergoes hardly any displacement along its track, can move in such a fashion in the plane of the band saw (2), during which motion the band saw (2) is displaced along its track, that the grinding belt (15) can perform a consecutive whetting action in the longitudinal direction over a subsequent part (7) of the band-saw profile (1) and so forth until the whole or a desired section of the band-saw profile (1) has been ground.

3. An apparatus according to claim 1 or 2, characterized in that the motion of the grinding belt (15) in the plane of the band saw (2) is induced by the provision of a connected push/pull rod (16) which can be conducted by positive drive according to a pattern (17) corresponding with this motion.

4. An apparatus according to any one of claims 1-3, characterized in that it comprises a tensioning pulley (14) over which the grinding belt (15) can be made to move.

5. An apparatus according to any one of the preceding claims 1-4, characterized in that it comprises a bearing frame (22) for supporting a band saw (2), on which frame (22) the band saw (2) can be conucted along its track, whilst at least part of the bearing frame (22) is hingeable relative to a horizontal shaft (25).

6. A process for grinding a profile (1) of a band saw (2) by means of an apparatus according to any one of claims 1-5.

## Patentansprüche

1. Vorrichtung zum Schleifen eines Profils (1) eines Bandsägeblattes (2), die ein Schleifmittel (3, 15) aufweist, das oberhalb einer Bahn angeordnet ist, entlang der das Bandsägeblatt (2) unter Einsatzbedingungen geführt wird und wodurch eine Relativbewegung zwischen den Bandsägeblatt (2) und dem Schleifmittel (3, 15) in der Ebene des Bandsägeblattes (2) zum Schleifen von einzelnen, aufeinanderfolgenden Teilen (7) des Profils (1) des Bandsägeblatts (2) bewirkt werden kann, dadurch gekennzeichnet, daß das Schleifmittel (3, 15) im wesentlichen aus einem endlosen Schleifriemen (15) besteht, der fortlaufend in der Ebene des Bandsägeblattes (2) über wenigstens eine Andruckrolle (13) umlaufen kann, und daß Steuermittel (16, 17) zum Führen der Schleifwirkung des Schleifriemens (15) vorhanden sind, während sich dieser in der Längsrichtung über einen bestimmten Teil (7) des Bandsägeblattprofils (1) bewegt, während wenigstens eines Teils der besagten Bewegung in der Ebene des Bandsägeblattes (2).

2. Vorrichtung nach Anspruch 1, dadurch gekennzeichnet, daß sich der Schleifriemen (15) unter Einsatzbedingungen nach jeder Schleifwirkung, die eine Längsbewegung über einen besonderen Teil (7) des Bandsägeblattprofils (1) mit sich bringt, wobei das Bandsägeblatt (2) während dieser Bewegung praktisch keine Verschiebung entlang seiner Bahn erfährt, derart in der Ebene des Bandsägeblatts (2) bewegen kann, wobei das Bandsägeblatt (2) während dieser Bewegung entlang seiner Bahn verschoben wird, daß der Schleifriemen eine nachfolgende Schleifwirkung in der Längsrichtung über einen nachfolgenden Teil (7) des Bandsägeblattprofils (1) ausführen kann, usw., bis das gesamte oder ein gewünschter Abschnitt des Bandsägeblattprofils (1) geschliffen ist.

3. Vorrichtung nach Anspruch 1 oder 2, dadurch gekennzeichnet, daß die Bewegung des Schleifriemens (15) in der Ebene des Bandsägeblatts (2) durch die Anordnung einer gekoppelten Druck-/Zugstange (16) erzeugt wird, die durch einen Zwangsantrieb entsprechend einem mit dieser Bewegung übereinstimmenden Muster (17) geführt wird.

4. Vorrichtung nach einem der Ansprüche 1 bis 3, dadurch gekennzeichnet, daß sie eine Spannrolle (14) umfaßt, über die der Schleifriemen (15) laufen gelassen werden kann.

5. Vorrichtung nach einem der Ansprüche 1 bis 4, dadurch gekennzeichnet, daß sie einen Tragrahmen (22) zum Abstützen eines Blattsägeblattes (2) umfaßt, auf dem das Bandsägeblatt (2) entlang seiner Bahn geführt werden kann, wobei wenigstens ein Teil des Tragrahmens (22) relativ zu einer horizontalen Achse (25) schwenkbar ist.

6. Verfahren zum Schleifen eines Profils (1) eines Bandsägeblatts (2) mittels einer Vorrichtung gemäß einem der Ansprüche 1 bis 5.

## Revendications

1. Appareil pour rectifier un profil (1) d'une scie à ruban (2), lequel appareil est prévu avec un support abrasif (3, 15) disposé au-dessus d'un chemin de roulement sur lequel la scie à ruban (2) se déplace dans des conditions de fonctionnement et grâce auquel un mouvement relatif entrelacé entre la scie à ruban (2) et le support abrasif (3, 15) peut être effectué dans le plan de la scie à ruban (2) pour la rectification des parties individuelles consécutives (7) du profil (1) de la scie à ruban (2), caractérisé en ce que le support abrasif (3, 15) est constitué principalement d'une courroie de rectification sans fin (15) qui peut circuler en continu dans le plan de la scie à ruban (2) sur au moins une poulie de pression (13), et en ce que des moyens de commande (16, 17) sont prévus pour guider l'action d'aiguisage de la courroie de rectification (15) tout en se déplaçant dans la direction longitudinale sur une partie spécifique (7) du profil (1) de la scie à ruban pendant au moins une partie dudit mouvement dans le plan de la scie à ruban (2).

2. Appareil selon la revendication 1, caractérisé en ce que dans des conditions de fonctionnement la courroie de rectification (15), après chaque action d'aiguisage impliquant un mouvement longitudinal sur une partie spécifique (7) du profil (1) de la scie à ruban, pendant lequel mouvement la scie à ruban (2) subit difficilement tout déplacement suivant son chemin de roulement, peut se déplacer de cette manière dans le plan de la scie à ruban (2), pendant lequel mouvement la scie à ruban (2) est déplacée suivant son chemin de roulement, en ce que la courroie de rectification (15) peut effectuer une action d'aiguisage suivante dans la direction longitudinale sur une partie suivante (7) du profil de la scie à ruban (1) et ainsi de suite jusqu'à ce que le tout ou une section désirée du profil (1) de la scie à ruban ait été rectifié.

3. Appareil selon la revendication 1 ou 2, caractérisé en ce que le mouvement de la courroie de rectification (15) dans le plan de la scie à ruban (2) est provoqué en prévoyant une tige de poussée/traction connectée (16) qui peut être entraînée conformément à une configuration (17) correspondant à ce mouvement.

4. Appareil selon l'une quelconque des revendications 1 à 3, caractérisé en ce qu'il comprend une poulie de tension (14) sur laquelle la courroie de rectification (15) peut être placée pour se déplacer.

5. Appareil selon l'une quelconque des revendications précédentes 1 à 4, caractérisé en ce qu'il comprend un cadre d'appui (22) pour supporter une scie à ruban (2) sur lequel cadre (22), la scie à ruban (2) peut se déplacer suivant son chemin de roulement tandis qu'au moins une partie du cadre d'appui (22) peut être articulée par rapport à un arbre horizontal (25).

6. Procédé pour rectifier un profil (1) d'une scie à ruban (2) au moyen d'un appareil selon l'une quelconque des revendications 1 à 5.
